# EUROPEAN PATENT APPLICATION

(11) **EP 4 408 123 A1**
(43) Date of publication of application: **31.07.2024**
(21) Application number: 23160493.5
(22) Date of filing: 07.03.2023
(51) Int. Cl.: H04W 92/18, H04W 88/04

(54) **TERMINAL APPARATUS, METHOD, AND INTEGRATED CIRCUIT**

(30) Priority: 26.01.2023 JP 2023010288
(71) Applicant: SHARP Kabushiki Kaisha, Sakai-City, Osaka 590-8522 (JP)
(72) Inventor: KAWANO, Takuma, Sakai City, Osaka, 590-8522 (JP); YAMADA, Shohei, Sakai City, Osaka, 590-8522 (JP); TSUBOI, Hidekazu, Sakai City, Osaka, 590-8522 (JP); INOUE, Kyosuke, Sakai City, Osaka, 590-8522 (JP); MIYAKE, Taichi, Sakai City, Osaka, 590-8522 (JP)
(74) Representative: Müller Hoffmann & Partner

(57) **Abstract**

A first terminal apparatus for performing sidelink communication receives a first message from a second terminal apparatus, determines information based on a Reference Signal Received Power, RSRP, of the first message received from the second terminal apparatus, and transmits a second message including the information to a third terminal apparatus, wherein the first message and the second message are messages used to select a terminal apparatus being responsible to forward a sidelink transmission of the second terminal apparatus to the third terminal apparatus.

## Description

### Technical Field

The present invention relates to a terminal apparatus, a method, and an integrated circuit.

### Background Art

In the 3rd Generation Partnership Project (3GPP (trade name)) being a standardization project for cellular mobile communication systems, technical study and standardization have been carried out on the cellular mobile communication systems including radio access, core networks, services, and the like.

For example, in 3GPP, technical study and standardization have been started on Evolved Universal Terrestrial Radio Access (E-UTRA) as a radio access technology (RAT) for cellular mobile communication systems for the 3.9th generation and the 4th generation. Further, at present, in 3GPP, technical study and the standardization have been carried out enhanced technology of E-UTRA. Note that E-UTRA may also be referred to as Long Term Evolution (LTE: trade name), and its enhanced technology may also be referred to as LTE-Advanced (LTE-A) and LTE-Advanced Pro (LTE-A Pro).

In 3GPP, technical study and standardization have been started on New Radio or NR Radio access (NR) as a radio access technology (RAT) for cellular mobile communication systems for the 5th generation (5G). Further, at present, in 3GPP, technical study and the standardization have been carried out on enhanced technology of NR.

### Citation List

### Non Patent Literature

NPL 1: 3GPP TS 38.331 v17.2.0, "Evolved Universal Terrestrial Radio Access (E-UTRA); Radio Resource Control (RRC); Protocol specifications" pp37-1107
NPL 2: 3GPP TS 38.321 v17.1.0, "NR; Medium Access Control (MAC) protocol specification" pp 1 7 -104
NPL 3: 3GPP TS 38.213 v17.1.0, "NR; Physical layer procedures for control" pp14-20
NPL 4: 3GPP TS 38.215 v17.1.0, "NR; Physical layer measurements" pp16-18
NPL 5: 3GPP TS 23.304 v17.2.1, "Proximity based Services (ProSe) in the 5G System (5GS)" pp12-97
NPL 6: 3GPP TS 38.300 v17.2.0, "NR; NR andNG-RAN Overall Description" pp31-170
NPL 7: RP-221262, "Revised WID on NR sidelink relay enhancements"
NPL 8: 3GPP TR 23.700-33 v1.1.0, "Study on system enhancement for Proximity based Services (ProSe) in the 5G System (5GS); Phase 2"

### Summary of Invention

### Technical Problem

In 3GPP, as an extended technique of NR, a technique called a sidelink is under study in which terminal apparatuses directly communicate with each other without using a core network, and a study has been started on a technique (UE-to-UE relay) in which another terminal apparatus is added between the terminal apparatuses to support communication between the terminal apparatuses.

An aspect of the present invention has been made in light of the foregoing, and an object of the present invention is to provide a terminal apparatus, a base station apparatus, a communication method, and an integrated circuit capable of performing efficient communication control.

### Solution to Problem

In order to accomplish the object described above, an aspect of the present invention is contrived to provide the following means. Specifically, an aspect of the present invention is a first terminal apparatus for performing sidelink communication, the first terminal apparatus including: a processing unit; a receiver configured to receive a first message from a second terminal apparatus; and a transmitter, wherein the processing unit determines information based on a Reference Signal Received Power (RSRP) of the first message received from the second terminal apparatus, the transmitter transmits a second message including the information to a third terminal apparatus, and the first message and the second message are messages used to select a terminal apparatus being responsible to forward a sidelink transmission of the second terminal apparatus to the third terminal apparatus.

An aspect of the present invention is a method for a first terminal apparatus configured to perform sidelink communication, the method including: receiving a first message from a second terminal apparatus; determining information based on a Reference Signal Received Power (RSRP) of the first message received from the second terminal apparatus; and transmitting a second message including the information to a third terminal apparatus, wherein the first message and the second message are messages used to select a terminal apparatus being responsible to forward a sidelink transmission of the second terminal apparatus to the third terminal apparatus.

An aspect of the present invention is an integrated circuit mounted on a first terminal apparatus configured to perform sidelink communication, the integrated circuit performing: receiving a first message from a second terminal apparatus; determining information based on a Reference Signal Received Power (RSRP) of the first message received from the second terminal apparatus; and transmitting a second message including the information to a third terminal apparatus, wherein the first message and the second message are messages used to select a terminal apparatus being responsible to forward a sidelink transmission of the second terminal apparatus to the third terminal apparatus.

Note that these comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Advantageous Effects of Invention

According to an aspect of the present invention, a terminal apparatus, a method, and an integrated circuit can perform efficient communication control processing.

### Brief Description of Drawings

FIG. 1 is a schematic diagram of a communication system according to the present embodiment.
FIG. 2 is a diagram of an example of a protocol architecture of a sidelink according to the present embodiment.
FIG. 3 is a diagram of an example of a protocol architecture of a sidelink according to the present embodiment.
FIG. 4 is a diagram of an example of a protocol architecture of a sidelink according to the present embodiment.
FIG. 5 is a block diagram illustrating a configuration of a terminal apparatus according to the present embodiment.
FIG. 6 is a diagram of an example of a protocol architecture of a sidelink according to the present embodiment.
FIG. 7 is a diagram of an example of a protocol architecture of a sidelink according to the present embodiment.
FIG. 8 is an example of processing according to the present embodiment.
FIG. 9 is an example of processing according to the present embodiment.
FIG. 10 is an example of processing according to the present embodiment.
FIG. 11 is an example of processing according to the present embodiment.

### Description of Embodiments

The present embodiment will be described below in detail with reference to the drawings.

Note that in the present embodiment, names of nodes and entities and processing in the nodes and entities in a case that a radio access technology is NR and E-UTRA will be described, but the present embodiment may be applied to other radio access technologies. The name of each of the nodes or entities in the present embodiment may be a different name.

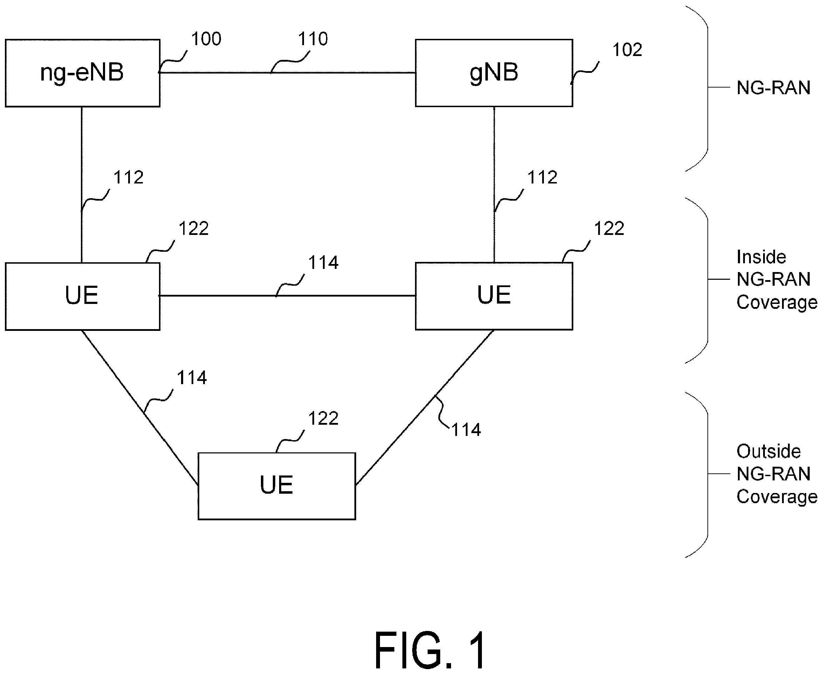

FIG. 1 is a schematic diagram of a communication system according to the present embodiment. Note that functions of nodes, radio access technologies, core networks, interfaces, and the like described with reference to FIG. 1 are some functions closely related to the present embodiment, and other functions may be included.

E-UTRA may be a radio access technology. E-UTRA may be an air interface between a UE 122 and an ng-eNB 100. The air interface 112 between the UE 122 and the ng-eNB 100 may be referred to as a Uu interface. The ng-eNB (ng E-UTRAN Node B) 100 may be a base station apparatus. The ng-eNB 100 may have an E-UTRA protocol described below. The E-UTRA protocol may include an E-UTRA user plane (UP) protocol to be described below and an E-UTRA control plane (CP) protocol to be described below. The ng-eNB 100 may terminate the E-UTRA user plane protocol and the E-UTRA control plane protocol for the UE 122. A radio access network including an eNB may be referred to as an E-UTRAN.

NR may be a radio access technology. NR may be an air interface between the UE 122 and a gNB 102. The air interface 112 between the UE 122 and the gNB 102 may be referred to as a Uu interface. The gNB (g Node B) 102 may be a base station apparatus. The gNB 102 may have an NR protocol described below. The NR protocol may include an NR user plane (UP) protocol to be described below and an NR control plane (CP) protocol to be described below. The gNB 102 may terminate the NR user plane protocol and the NR control plane protocol for the UE 122.

Note that an interface 110 between the ng-eNB 100 and the gNB 102 may be referred to as an Xn interface. The ng-eNB and the gNB may be connected to a 5GC via an interface called an NG interface (not illustrated). The 5GC may be a core network. One or more base station apparatuses may connect to the 5GC via the NG interface.

A state in which connection to the base station apparatus is possible only via the Uu interface may be referred to as Inside NG-RAN Coverage or In-Coverage (IC). A state in which connection to the base station apparatus only via the Uu interface is not possible may be referred to as Outside NG-RAN Coverage or Out-of-Coverage (OOC). An air interface 114 between a LTE 122 and a LTE 122 may be referred to as a PC5 interface. Communication between the UEs 122 performed via the PC5 interface may be referred to as sidelink (SL) communication. A terminal apparatus capable of performing sidelink communication may be referred to as a terminal apparatus capable of sidelink communication.

Note that, in the following description, the ng-eNB 100 and/or the gNB 102 is simply referred to as a base station apparatus, and the UE 122 is also simply referred to as a terminal apparatus or a UE. The PC5 interface is also simply referred to as the PC5 and the Uu interface is also simply referred to as the Uu.

The sidelink is a technology for performing direct communication between the terminal apparatuses via the PC5, and sidelink transmission and/or reception on the PC5 are performed inside NG-RAN coverage and outside NG-RAN coverage.

There are three transmission modes for NR SL communication, and an SL communication is performed in one of the transmission modes using a pair of a Source Layer-2 (L2) identifier (ID) and a Destination Layer-2 (L2) identifier (ID). The source layer-2 identifier and the destination layer-2 identifier may be referred to as a source L2ID and a destination L2ID, respectively. These three transmission modes are "Unicast transmission," "Groupcast transmission," and "Broadcast transmission". Note that the transmission mode may be referred to as a cast type or the like.

The unicast transmission is characterized by (1) support of one PC5-RRC connection between paired UEs, (2) transmission and/or reception of control information and user traffic between UEs on the sidelink, (3) support of sidelink HARQ feedback, (4) transmit power control on the sidelink, (5) support of RLC AM, and (6) detection of a radio link failure for a PC5-RRC connection.

The groupcast transmission is characterized by (1) transmission and/or reception of user traffic between UEs belonging to a sidelink group and (2) support for sidelink HARQ feedback.

The broadcast transmission is characterized by (1) transmission and/or reception of user traffic between UEs on the sidelink.

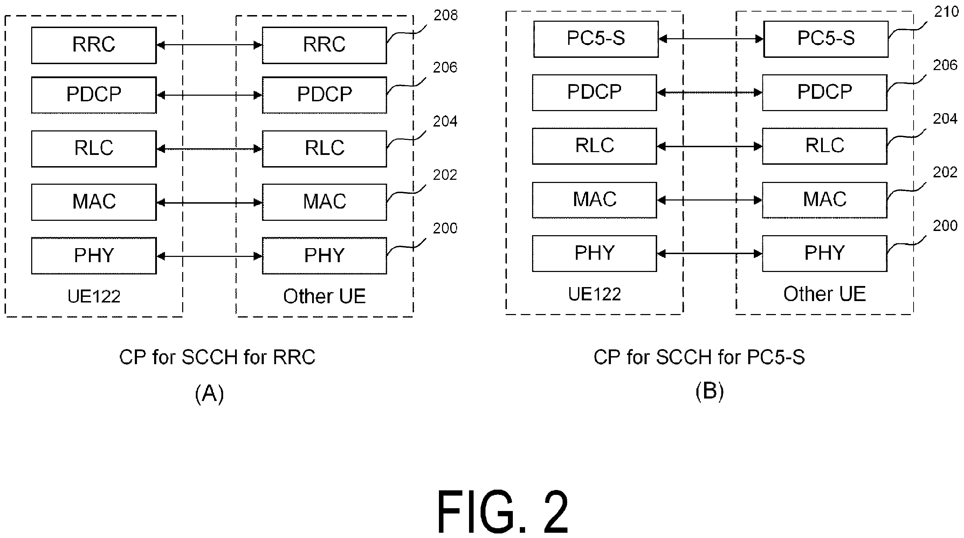

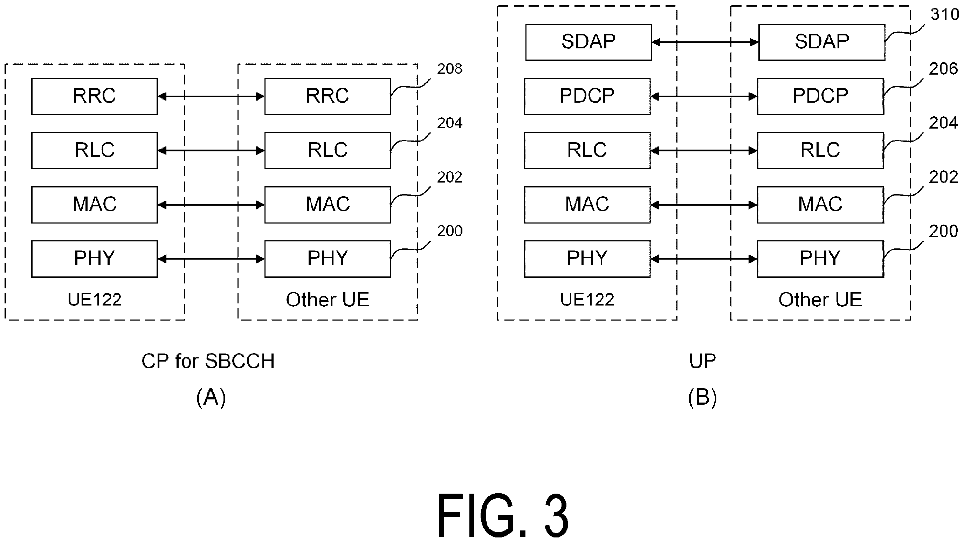

FIG. 2 and FIG. 3 are diagrams of an example of a protocol architecture in an NR sidelink communication according to the present embodiment. Note that the functions of the protocols described with reference to FIG. 2 and/or FIG. 3 are some functions closely related to the present embodiment, and other functions may be included. Note that in the present embodiment, a sidelink (SL) may be a link between the terminal apparatuses.

FIG. 2(A) is a diagram of a protocol stack of a Control Plane (CP) for an SCCH using RRC configured on the PC5 interface. As illustrated in FIG. 2(A), the control plane protocol stack for the SCCH using RRC may include a Physical layer (PHY) 200 which is a radio physical layer, a Medium Access Control (MAC) 202 which is a medium access control layer, a Radio Link Control (RLC) 204 which is a radio link control layer, a Packet Data Convergence Protocol (PDCP) 206 which is a packet data convergence protocol layer, and a Radio Resource Control (RRC) 208 which is a radio resource control layer. FIG. 2(B) is a diagram of a protocol stack of a control plane for an SCCH using PC5-S configured on the PC5 interface. As illustrated in FIG. 2(B), the control plane protocol stack for the SCCH using PC5-S may include the Physical layer (PHY) 200 which is a radio physical layer, the Medium Access Control (MAC) 202 which is a medium access control layer, the Radio Link Control (RLC) 204 which is a radio link control layer, the Packet Data Convergence Protocol (PDCP) 206 which is a packet data convergence protocol layer, and a PC5 Signalling (PC5-S) 210 which is a PC5 signalling layer.

FIG. 3(A) is a diagram of a protocol stack of a control plane for an SBCCH configured on the PC5 interface. As illustrated in FIG. 3(A), the control plane protocol stack for the SBCCH may include the Physical layer (PHY) 200 which is a radio physical layer, the Medium Access Control (MAC) 202 which is a medium access control layer, the Radio Link Control (RLC) 204 which is a radio link control layer, and the Radio Resource Control (RRC) 208 which is a radio resource control layer. FIG. 3(B) is a diagram of a protocol stack of a User Plane (UP) for an STCH configured on the PC5 interface. As illustrated in FIG. 3(B), the user plane protocol stack for the STCH may include the Physical layer (PHY) 200 which is a radio physical layer, the Medium Access Control (MAC) 202 which is a medium access control layer, the Radio Link Control (RLC) 204 which is a radio link control layer, the Packet Data Convergence Protocol (PDCP) 206 which is a packet data convergence protocol layer, and a Service Data Adaptation Protocol (SDAP) 310 which is a service data adaptation protocol layer.

Note that an Access Stratum (AS) layer may be a layer including a part or all of the PHY 200, the MAC 202, the RLC 204, the PDCP 206, the SDAP 310, and the RRC 208. The PC5-S 210 and a Discovery 400 described below may be layers higher than the AS layer.

In the present embodiment, terms such as PHY (PHY layer), MAC (MAC layer), RLC (RLC layer), PDCP (PDCP layer), SDAP (SDAP layer), RRC (RRC layer), and PC5-S (PC5-S layer) may be used. In this case, the PHY (PHY layer), the MAC (MAC layer), the RLC (RLC layer), the PDCP (PDCP layer), the SDAP (SDAP layer), the RRC (RRC layer), the PC5-S (PC5-S layer) may be a PHY (PHY layer), a MAC (MAC layer), an RLC (RLC layer), a PDCP (PDCP layer), an SDAP (SDAP layer), an RRC (RRC layer), and a PC5-S (PC5-S layer) of the NR sidelink protocol, respectively. Note that in a case that a sidelink communication is performed using the E-UTRA technology, the SDAP layer may not be provided. Note that, in order to make it clear that a protocol is a protocol for sidelink, for example, the RLC may be expressed as sidelink RLC, SL, RLC, PC5 RLC, or the like, and other protocols by prefixed by "sidelink," "SL," or "PC5" may express protocols for sidelink.

In the present embodiment, in a case of distinguishing an E-UTRA protocol and an NR protocol from each other, the PHY, the MAC, the RLC, the PDCP, and the RRC may be referred to as a PHY for E-UTRA or PHY for LTE, a MAC for E-UTRA or MAC for LTE, an RLC for E-UTRA or RLC for LTE, a PDCP for E-UTRA or PDCP for LTE, and an RRC for E-UTRA or RRC for LTE, respectively. The PHY, the MAC, the RLC, the PDCP, and the RRC may be expressed as an E-UTRA PHY or LTE PHY, an E-UTRA MAC or LTE MAC, an E-UTRA RLC or LTE RLC, an E-UTRA PDCP or LTE PDCP, and an E-UTRA RRC or LTE RRC, respectively, or the like. In a case of distinguishing an E-UTRA protocol and an NR protocol from each other, the PHY, the MAC, the RLC, the PDCP, and the RRC may be referred to as a PHY for NR, a MAC for NR, an RLC for NR, a PDCP for NR, and an RRC for NR, respectively. The PHY, the MAC, the RLC, the PDCP, and the RRC may be expressed as an NR PHY, an NR MAC, an NR RLC, an NR PDCP, and an NR RRC, respectively, or the like.

Entities in the AS layer of E-UTRA and/or NR will now be described. An entity having some or all of functions of the physical layer may be referred to as a PHY entity. An entity having some or all of functions of the MAC layer may be referred to as a MAC entity. An entity having some or all of functions of the RLC layer may be referred to as an RLC entity. An entity having some or all of functions of the PDCP layer may be referred to as a PDCP entity. An entity having some or all of functions of the SDAP layer may be referred to as an SDAP entity. An entity having some or all of the functions of the RRC layer may be referred to as an RRC entity. The PHY entity, the MAC entity, the RLC entity, the PDCP entity, the SDAP entity, and the RRC entity may be rephrased as a PHY, a MAC, an RLC, a PDCP, an SDAP, and an RRC, respectively.

Note that data provided from the MAC, the RLC, the PDCP, and the SDAP to a lower layer and/or data provided to the MAC, the RLC, the PDCP, and the SDAP from a lower layer may be referred to as a MAC Protocol Data Unit (PDU), an RLC PDU, a PDCP PDU, and an SDAP PDU, respectively. Data provided to the MAC, the RLC, the PDCP, and the SDAP from a higher layer and/or data provided from the MAC, the RLC, the PDCP, and the SDAP to a higher layer may be referred to as a MAC Service Data Unit (SDU), an RLC SDU, a PDCP SDU, and an SDAP SDU, respectively. A segmented RLC SDU may be referred to as an RLC SDU segment.

Here, the base station apparatus and the terminal apparatus exchange (transmit and/or receive) signals with each other in higher layers on the Uu interface. The higher layer may be referred to as an upper layer, and both may be interchangeably interpreted. For example, the base station apparatus and the terminal apparatus may transmit and/or receive an RRC message (also referred to as RRC signalling) in a Radio Resource Control (RRC) layer. In a Medium Access Control (MAC) layer, the base station apparatus and the terminal apparatus may transmit and/or receive a MAC Control Element. The RRC layer of the terminal apparatus acquires system information broadcast from the base station apparatus. In this regard, the RRC message, the system information, and/or the MAC control element is also referred to as higher layer signalling or a higher layer parameter. Each of the parameters included in the higher layer signalling received by the terminal apparatus may be referred to as a higher layer parameter. For example, the higher layer in processing in the PHY layer may mean a higher layer as viewed from the PHY layer, and thus may include one or more of the MAC layer, the RRC layer, the RLC layer, the PDCP layer, a Non Access Stratum (NAS) layer, and the like. For example, the higher layer in processing in the MAC layer may mean one or more of the RRC layer, the RLC layer, the PDCP layer, the NAS layer, and the like.

The terminal apparatuses also exchange (transmit and/or receive) signals with each other in higher layers on the PC5 interface. The terminal apparatuses may transmit and/or receive an RRC message (also referred to as RRC signalling) in a Radio Resource Control (RRC) layer. In the Medium Access Control (MAC) layer, the terminal apparatuses may transmit and/or receive a MAC Control Element (MAC CE) to and/or from each other. In this regard, the RRC message and/or the MAC control element is also referred to as higher layer signalling or a higher layer parameter. Each of the parameters included in the higher layer signalling received by the terminal apparatus may be referred to as a higher layer parameter. For example, the higher layer in processing in the PHY layer may mean a higher layer as viewed from the PHY layer, and thus may include one or more of the MAC layer, the RRC layer, the RLC layer, the PDCP layer, the PC5-S layer, the Discovery layer, and the like. For example, the higher layer in processing in the MAC layer may mean one or more of the RRC layer, the RLC layer, the PDCP layer, the PC5-S layer, the Discovery layer, and the like.

Hereinafter, "A is given (provided) in the higher layer" or "A is given (provided) by the higher layer" may mean that the higher layer (mainly the RRC layer, the MAC layer, or the like) of the terminal apparatus receives A from the base station apparatus or another terminal apparatus, and that A received is given (provided) from the higher layer of the terminal apparatus to the physical layer of the terminal apparatus. For example, "being provided with a higher layer parameter" in the terminal apparatus may mean that higher layer signalling is received from the base station apparatus or another terminal apparatus, and the higher layer parameter included in the received higher layer signalling is provided from the higher layer of the terminal apparatus to the physical layer of the terminal apparatus. A higher layer parameter being configured for the terminal apparatus may mean that the higher layer parameter is given (provided) to the terminal apparatus. For example, the higher layer parameter being configured for the terminal apparatus may mean that the terminal apparatus receives higher layer signalling from the base station apparatus or another terminal apparatus and configures the received higher layer parameter in the higher layer. Here, a higher layer parameter being configured for the terminal apparatus may include a default parameter given in advance to the higher layer of the terminal apparatus being configured. In describing transmission of an RRC message from the terminal apparatus to the base station apparatus or another terminal apparatus, an expression may be used that a message is submitted from the RRC entity of the terminal apparatus to a lower layer. In the terminal apparatus, "submitting a message to a lower layer" from the RRC entity may mean submitting the message to the PDCP layer. In the terminal apparatus, "submitting a message to a lower layer" from the RRC layer may mean submitting the message to a PDCP entity corresponding to each SRB (SRB 0, SRB 1, SRB 2, SRB 3, etc.) since the RRC message is transmitted using the SRB. In a case that the RRC entity of the terminal apparatus receives a notification (indication) from a lower layer, the lower layer may refer to one or more of the PHY layer, the MAC layer, the RLC layer, the PDCP layer, and the like.

An example of the function of the PHY will be described. The PHY of the terminal apparatus may have a function to transmit and/or receive data transmitted via a sidelink (SL) Physical Channel with a PHY of another terminal apparatus. The PHY may be connected with the MAC of a higher layer via a transport channel. The PHY may transfer data to and/or from the MAC via the transport channel. The PHY may also be provided with data from the MAC via the transport channel. In the PHY, in order to identify various pieces of control information, a Radio Network Temporary Identifier (RNTI) may be used.

Now, the physical channels will be described. The physical channels used for a radio communication between the terminal apparatus and the base station apparatus may include the following physical channels.
Physical Sidelink Broadcast CHannel (PSBCH)
Physical Sidelink Control CHannel (PSCCH)
Physical Sidelink Shared CHannel (PSSCH)
Physical Sidelink Feedback CHannel (PSFCH)

The PSBCH is used to broadcast the system information required by the terminal apparatus.

The PSCCH may be used to indicate resources or other transmission parameters for the PSSCH.

The PSSCH may be used to transmit data and control information related to HARQ/CSI feedback to another terminal apparatus.

The PSFCH may be used to carry HARQ feedback to another terminal apparatus.

An example of the function of the MAC will be described. The MAC may be referred to as a MAC sublayer. The MAC may have a function to map various Logical Channels to corresponding transport channels. The logical channel may be identified by a Logical Channel Identity (or Logical Channel ID). The MAC may be connected with the RLC of a higher layer via the logical channel. The logical channels may be classified, depending on a type of information to be transmitted, into a control channel for transmitting control information and a traffic channel for transmitting user information. The MAC may have a function to multiplex the MAC SDUs belonging to one logical channel or multiple different logical channels and provide the multiplexed MAC SDUs to the PHY. The MAC may have a function to de-multiplex the MAC PDUs provided from the PHY and provide the demultiplexed MAC PDUs to a higher layer via a logical channel to which each MAC SDU belongs. The MAC may have a function to perform error correction through Hybrid Automatic Repeat reQuest (HARQ). The MAC may have a function to report scheduling information. The MAC may have a function to perform priority processing between the terminal apparatuses by using dynamic scheduling. The MAC may have a function to perform priority processing between the logical channels in one terminal apparatus. The MAC may have a function to perform priority processing of overlapping resources in one terminal apparatus. The E-UTRA MAC may have a function to identify Multimedia Broadcast Multicast Services (MBMS). The NR MAC may have a function to identify a Multicast/Broadcast Service (MBS). The MAC may have a function to select a transport format. The MAC may have a function to perform Discontinuous Reception (DRX) and/or Discontinuous Transmission (DTX), a function to perform a Random Access (RA) procedure, a Power Headroom Report (PHR) function to notify of information on transmittable power, a Buffer Status Report (BSR) function to notify of information on a data amount of a transmission buffer, and the like. The NR MAC may have a Bandwidth Adaptation (BA) function. A MAC PDU format used for the E-UTRA MAC may be different from a MAC PDU format used for the NR MAC. The MAC PDU may include a MAC control element (MAC CE), which is an element for performing control in the MAC.

The MAC sublayer may additionally provide services and functions, on the PC5 interface, such as radio resource selection for selecting a radio resource for performing sidelink transmission, filtering of packets received in sidelink communication, priority processing between uplink and sidelink, and Sidelink Channel State Information (Sidelink CSI) reporting.

A logical channel for sidelink (SL) and mapping between the logical channel for sidelink and a transport channel used in E-UTRA and/or NR will be described.

The Sidelink Broadcast Control Channel (SBCCH) may be a logical channel for sidelink for broadcasting sidelink system information from one terminal apparatus to one or more terminal apparatuses. The SBCCH may be mapped to an SL-BCH which is a sidelink transport channel.

The Sidelink Control Channel (SCCH) may be a logical channel for sidelink for transmitting control information such as a PC5-RRC message and a PC5-S message from one terminal apparatus to one or more terminal apparatuses. The SCCH may be mapped to an SL-SCH which is a sidelink transport channel.

A Sidelink Traffic Control Channel (STCH) may be a logical channel for sidelink for transmitting user information from one terminal apparatus to one or more terminal apparatuses. The STCH may be mapped to an SL-SCH which is a sidelink transport channel.

An example of the function of the RLC will be described. The RLC may be referred to as an RLC sublayer. The E-UTRA RLC may have a function to segment and/or concatenate data provided from the PDCP of the higher layer and provide the data to the lower layer. The E-UTRA RLC may have a function to perform reassembly and re-ordering on data provided from the lower layer and provide the data to the higher layer. The NR RLC may have a function to add a sequence number independent of a sequence number added in the PDCP to the data provided from the PDCP of the higher layer. The NR RLC may have a function to segmenting the data provided from the PDCP and provide the segmented data to the lower layer. The NR RLC may have a function to perform reassembly on the data provided from the lower layer and provide the reassembled data to the higher layer. The RLC may have a data retransmission function and/or retransmission request function (Automatic Repeat reQuest (ARQ)). The RLC may have a function to perform error correction by the ARQ. Control information indicating data that needs to be retransmitted, which is transmitted from a reception side to a transmission side of the RLC in order to perform the ARQ, may be referred to as a status report. A status report transmission indication transmitted from the transmission side to the reception side of the RLC may be referred to as a poll. The RLC may have a function to detect data duplication. The RLC may have a function to discard data. The RLC may have three modes, namely a Transparent Mode (TM), an Unacknowledged Mode (UM), and an Acknowledged Mode (AM). In the TM, segmentation of data received from a higher layer may not be performed, and addition of an RLC header need not be performed. A TM RLC entity is a uni-directional entity and may be configured as a transmitting TM RLC entity or a receiving TM RLC entity. In the UM, segmentation and/or concatenation of data received from a higher layer, addition of an RLC header, and the like may be performed, but retransmission control of data may not be performed. A UM RLC entity may be a uni-directional entity or a bi-directional entity. In a case that the UM RLC entity is a uni-directional entity, the UM RLC entity may be configured as a transmitting UM RLC entity or as a receiving UM RLC entity. In a case that the UM RLC entity is a bi-directional entity, a UM RRC entity may be configured as a UM RLC entity consisting of a transmitting side and a receiving side. In the AM, segmentation and/or concatenation of data received from a higher layer, addition of an RLC header, retransmission control of data, and the like may be performed. An AM RLC entity is a bi-directional entity and may be configured as an AM RLC consisting of a transmitting side and a receiving side. Note that data provided to a lower layer and/or data provided from a lower layer in the TM may be referred to as a TMD PDU. Data provided to a lower layer and/or data provided from a lower layer in the UM may be referred to as a UMD PDU. Data provided to a lower layer and/or data provided from a lower layer in the AM may be referred to as an AMD PDU. An RLC PDU format used for the E-UTRA RLC may be different from an RLC PDU format used for the NR RLC. The RLC PDU may include an RLC PDU for data and an RLC PDU for control. The RLC PDU for data may be referred to as an RLC DATA PDU (RLC Data PDU, RLC data PDU). The RLC PDU for control may be referred to as an RLC CONTROL PDU (RLC Control PDU, RLC control PDU).

Note that in the sidelink, the TM may be used for the SBCCH, only the UM is used for groupcast transmission and broadcast transmission, and the UM and the AM can be used for unicast transmission. In the sidelink, the UM in groupcast transmission and broadcast transmission supports only uni-directional transmission.

An example of the function of the PDCP will be described. The PDCP may be referred to as a PDCP sublayer. The PDCP may have a function to perform sequence number maintenance. The PDCP may have a header compression/decompression function to efficiently transmit user data such as an IP Packet and an Ethernet frame, in a radio section. A protocol used for header compression/decompression of an IP packet may be referred to as a Robust Header Compression (ROHC) protocol. A protocol used for Ethernet frame header compression/decompression may be referred to as an Ethernet (trade name) Header Compression (EHC) protocol. The PDCP may have a data encryption/decryption function. The PDCP may have a data integrity protection/integrity verification function. The PDCP may have a re-ordering function. The PDCP may have a PDCP SDU retransmission function. The PDCP may have a function to discard data using a discard timer. The PDCP may have a Duplication function. The PDCP may have a function to discard received duplication data. The PDCP entity is a bi-directional entity and may include a transmitting PDCP entity and a receiving PDCP entity. A PDCP PDU format used for the E-UTRA PDCP may be different from a PDCP PDU format used for the NR PDCP. The PDCP PDU may include a PDCP PDU for data and a PDCP PDU for control. The PDCP PDU for data may be referred to as a PDCP DATA PDU (PDCP Data PDU, PDCP data PDU). The PDCP PDU for control may be referred to as a PDCP CONTROL PDU (PDCP Control PDU, PDCP control PDU).

Note that in the sidelink, there are the following restrictions on the functions and services of the PDCP.
(1) Out-of-order delivery may be supported only by unicast transmission.
(2) Duplication on the PC5 interface is not supported.

An example of the function of the SDAP will be described. The SDAP is a service data adaptation protocol layer. In the sidelink, the SDAP may have a function to perform association (mapping) between a QoS flow in the sidelink sent from a terminal apparatus to another terminal apparatus and a sidelink data radio bearer (DRB). The SDAP may have a function to store mapping rule information. The SDAP may have a function to perform marking a QoS Flow identifier (ID) (QFI). Note that the SDAP PDU may include an SDAP PDU for data and an SDAP PDU for control. The SDAP PDU for data may be referred to as an SDAP DATA PDU (SDAP Data PDU, SDAP data PDU). The SDAP PDU for control may be referred to as an SDAP CONTROL PDU (SDAP Control PDU, SDAP control PDU). Note that in the sidelink, there may be one SDAP entity of the terminal apparatus per destination for any one of unicast transmission, groupcast transmission, and broadcast transmission associated with the destination. A reflective QoS is not supported on the PC5 interface.

An example of the function of the RRC will be described. The RRC may support services and functions on the PC5 interface such as forwarding of a PC5-RRC message between peer UEs, maintenance and release of a PC5-RRC connection between two UEs, and detection of a sidelink radio link failure for a PC5-RRC connection. The PC5-RRC connection is a logical connection between two UEs corresponding to a pair of source L2ID and destination L2ID, and is considered to be established after a corresponding PC5 unicast link is established. There is a one to-one correspondence between the PC5-RRC connection and the PC5 unicast link. A UE may have multiple PC5-RRC connections to one or more UEs for different pairs of source L2ID and destination L2ID. Separate PC5-RRC procedures and messages may be used for a UE to forward UE capability and sidelink configuration to a peer LTE. Both peer LTEs may exchange their own UE capabilities and sidelink configurations with each other using separate bi-directional procedures. In a case that the sidelink transmission is not of interest, in a case that a sidelink radio link failure is detected for the PC5-RRC connection, and in a case that a Layer-2 link release procedure is completed, the UE releases the PC5-RRC connection.

The UE that performs sidelink transmission may transmit the PSCCH and the PSSCH in association with each other. Note that the sidelink transmission may be to transmit a signal and/or data (message) through a physical channel (such as PSBCH, PSSCH, or PSCCH) for sidelink, and the sidelink reception may be receiving a signal and/or data (message) through a physical channel for sidelink. Communication using sidelink transmission and sidelink reception may be referred to as sidelink communication. The UE may recognize the data (message) based on the signal. Each PSSCH transmission may be associated with a PSCCH transmission. The PSCCH transmission may carry a first SCI (1st stage of the SCI) associated with the PSSCH transmission, and a second SCI (2nd stage of the SCI) may be carried within resources of the PSSCH. Note that the PSCCH transmission may include the first SCI and the PSSCH transmission may include the second SCI. The PSCCH transmission and the PSSCH transmission may be referred to as sidelink transmission, and the SCI may be Sidelink Control Information. The first SCI may include information in a format referred to as SCI format 1-A and may be used for scheduling the PSSCH and the second SCI on the PSSCH. The SCI format 1-A may include information such as a priority of data, a frequency resource and a time resource on which the PSSCH is transmitted, a resource reservation period, a DMRS mapping pattern, a type of the second SCI, a beta offset indication value, the number of DMRS ports, information indicating a modulation and coding scheme, and other information. The SCI carried on the PSSCH may be the second SCI, and the second SCI may transport sidelink scheduling information and/or inter-LTE coordination related information. The second SCI may include information in a format referred to as SCI format 2-A, SCI format 2-B, SCI format 2-C, or the like. The SCI format 2-A, the SCI format 2-B, and the SCI format 2-C may include information such as HARQ process related information, information indicating whether data is new data, a redundancy version, a source ID for identifying a source UE, a destination ID for identifying a destination UE, and information indicating whether HARQ feedback is possible. The SCI format 2-A may additionally include information indicating a cast type and information indicating whether to request Channel State Information (CSI). The SCI format 2-B may additionally include an identifier indicating a zone and request information related to a communication range. The SCI format 2-C may additionally include information indicating whether to request channel state information and information indicating whether to provide or request inter-UE coordination information. In a case that the information providing the inter-LTE coordination information is included in the SCI format 2-C, the SCI format 2-C may additionally include information indicating a resource combination, information indicating the first resource location, information indicating a reference slot location, information indicating a resource set type, the lowest subchannel index, and the like. In a case that the information requesting the inter-LTE coordination information is included in the SCI format 2-C, the SCI format 2-C may additionally include information such as a priority, the number of subchannels, a resource reservation interval, a resource selection window location, and information indicating a resource set type. Note that each SCI format may include information other than the above-described information.

Next, a procedure for a UE to receive the PSSCH will be described below. The UE, in a case of detecting the SCI format 1-A on the PSCCH, can decode the PSSCH in accordance with the detected SCI format 2-A or SCI format 2-B and the associated PSSCH resource configuration configured by the higher layers. Note that the UE does not need to decode more than one PSCCH in each PSCCH resource candidate. In a case that the LTE does not support the modulation and coding scheme indicated by the SCI format 1-A, the UE does not need to decode the PSSCH associated with the corresponding SCI format 2-A and SCI format 2-B, and the SCI format 1-A.

The UE may measure the PSSCH RSRP from the DMRS resource elements for the PSSCH associated with the received SCI format 1-A in a case that the PSSCH is configured in a parameter indicating whether the DMRS used for L1 RSRP measurement during the sensing operation is a DMRS of the PSCCH or a DMRS of the PSSCH in the higher (RRC) layer, and may measure the PSCCH RSRP from the DMRS resource elements for the PSCCH associated with the received SCI format 1-A in a case that the PSCCH is configured.

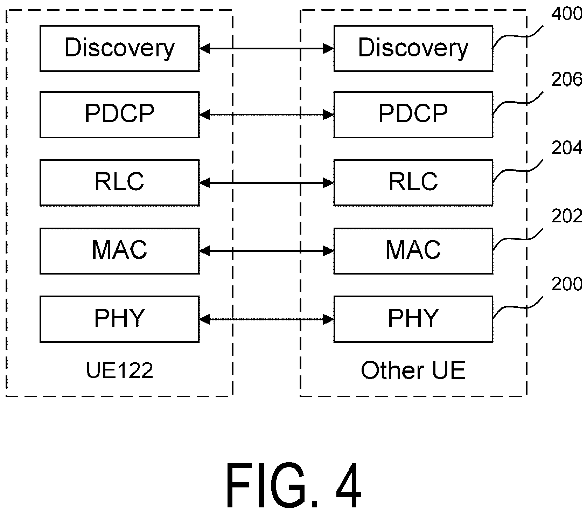

A terminal apparatus capable of sidelink communication may perform discovery. Model A and Model B may be present in discovery. FIG. 4 illustrates a protocol stack in a discovery procedure. The Model A may use a single discovery protocol message and the Model B may use two discovery protocol messages. The single discovery protocol message in the Model A may be an Announcement message, and the discovery protocol message in the Model B may be a Solicitation message and a Response message. Note that the announcement message, the solicitation message, and the response message may be collectively referred to as a discovery message, and messages with other names used in the discovery procedure may be referred to as discovery messages. Outline of procedures of Model A and Model B in ProSe Direct Discovery will be described below.

In the Model A, a LTE transmitting an announce message may be referred to as an Announcing LTE, and a LTE monitoring an announce message may be referred to as a Monitoring UE. The announce message may include information such as a discovery message type, a ProSe Application Code or a ProSe Restricted Code, and a security protection element, and may additionally include metadata information. The announce message is transmitted using the Destination Layer-2 ID (destination L2ID) and the Source Layer-2 ID (source L2ID), and the monitoring UE determines the destination L2ID to receive the announce message. Note that the destination L2ID may be a Layer-2 identifier of the destination LTE, and the source L2ID may be a Layer-2 identifier of the source UE.

In the Model B, a LTE transmitting a solicitation message may be referred to as a discoverer UE, and a UE receiving a solicitation message and/or a UE transmitting a response message to a discoverer UE may be referred to as a discoveree UE. The solicitation message may include information such as a discovery message type, a ProSe Query Code, and a security protection element. The solicitation message is transmitted using the destination L2ID and the source L2ID, and the discoveree UE determines the destination L2ID to receive the solicitation message. The discoveree UE responding to the solicitation message transmits a response message. The response message may include information such as a discovery message type, a ProSe Response Code, and a security protection element, and may additionally include metadata information. The response message is transmitted using the source L2ID and the destination L2ID is set to the source L2ID of the received solicitation message.

In discovery, there may be a type other than ProSe Direct Discovery for discovering another UE in order to perform direct communication with another UE, specifically, there may be Group member Discovery for discovering one or more UEs in order to perform communication within a group using a sidelink, 5G ProSe UE-to-Network Relay Discovery for discovering candidate relay UEs in order to connect to a network via a relay UE, and the like. Note that although the above-described discovery is an example of discovery provided by an application called ProSe, in addition to the above-described types, there may be different types of discovery according to an application or service performing sidelink communication. The information included in the discovery protocol message may vary according to the type of discovery, and an additional message may be transmitted to transmit additional information.

FIG. 4 is a diagram illustrating an example of a protocol architecture including a discovery protocol according to the present embodiment. As illustrated in FIG. 4, a discovery plane protocol stack including the discovery protocol may include the Physical layer (PHY) 200 which is a radio physical layer, the Medium Access Control (MAC) 202 which is a medium access control layer, the Radio Link Control (RLC) 204 which is a radio link control layer, the Packet Data Convergence Protocol (PDCP) 206 which is a packet data convergence protocol layer, and the Discovery 400 which is a discovery protocol layer. The Discovery 400 may be a protocol used to handle a procedure related to discovery. An interface between UEs performing discovery may be referred to as a PC5-D.

Multiple resource pools for transmitting a message (discovery message) in the discovery procedure may be configured, and one or more resource pools may be configured dedicated to discovery. In a case that the discovery-dedicated resource pool is configured, the UE may use the discovery dedicated resource pool as a resource pool for transmitting the discovery message, and in a case that the discovery-dedicated resource pool is not configured, the LTE may use the resource pool for sidelink communication as a resource pool for transmitting the discovery message. Note that multiple resource pools for sidelink communication and the multiple discovery-dedicated resource pools may be configured at the same time. Each resource pool may be configured through UE-dedicated signalling or may be preconfigured.

A Direct Communication Request (DCR) message will also be described. The direct communication request message may be a message used to establish a unicast link. The DCR message may include at least the identifier of the source UE, may include the identifier of the target LTE in a case that the identifier of the target LTE is provided by the application layer, or may include other information, for example, security-related information or application-related information in other cases. The DCR message may also be transmitted in unicast or broadcast using the source L2ID and the destination L2ID. Note that the discovery message and the DCR message may be messages transmitted through sidelink.

In each unicast PC5-RRC connection, a sidelink signalling radio bearer (SRB) may be configured. A sidelink SRB used to transmit a PC5-S message before PC5-S security is established may be referred to as an SL-SRB 0. A sidelink SRB used to transmit a PC5-S message to establish the PC5-S security may be referred to as an SL-SRB 1. A sidelink SRB used to transmit a protected PC5-S message after the PC5-S security is established may be referred to as an SL-SRB 2. A sidelink SRB used to transmit a protected PC5-RRC signalling after the PC5-S security is established may be referred to as an SL-SRB 3. A sidelink SRB used to transmit and/or receiving a discovery message in NR may be referred to as an SL-SRB 4. Note that the PC5-RRC signalling may be RRC signalling between UEs that is transmitted and/or received on the PC5. Note that the PC5-RRC signalling may be referred to as a PC5-RRC message or the like.

The UE-to-UE relay may refer to a technology in which in a case that a source UE communicates with a destination UE, the source UE performs communication via sidelink communication with a Relay UE. The relay UE may function and/or act to forward (or relay) data for the destination UE received from the source UE to the destination UE. The source UE, the destination UE, and the relay UE may be referred to by different names. For example, each of the source UE and the destination UE may be referred to as a remote UE, a U2U Remote UE, or the like, and the relay UE may be referred to as a U2U relay UE, or the like. The term "UE-to-UE relay" may also be referred to as a U2U relay.

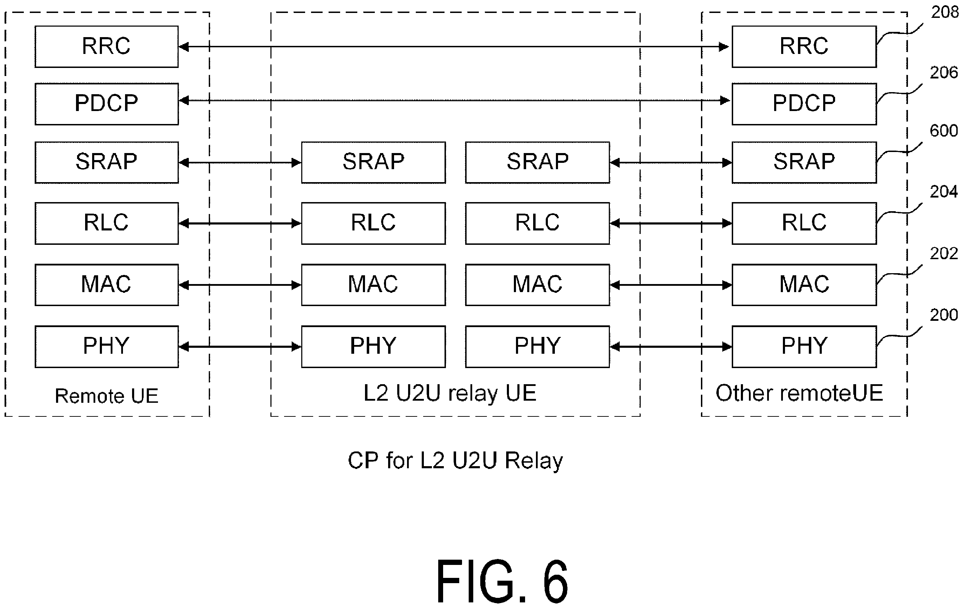

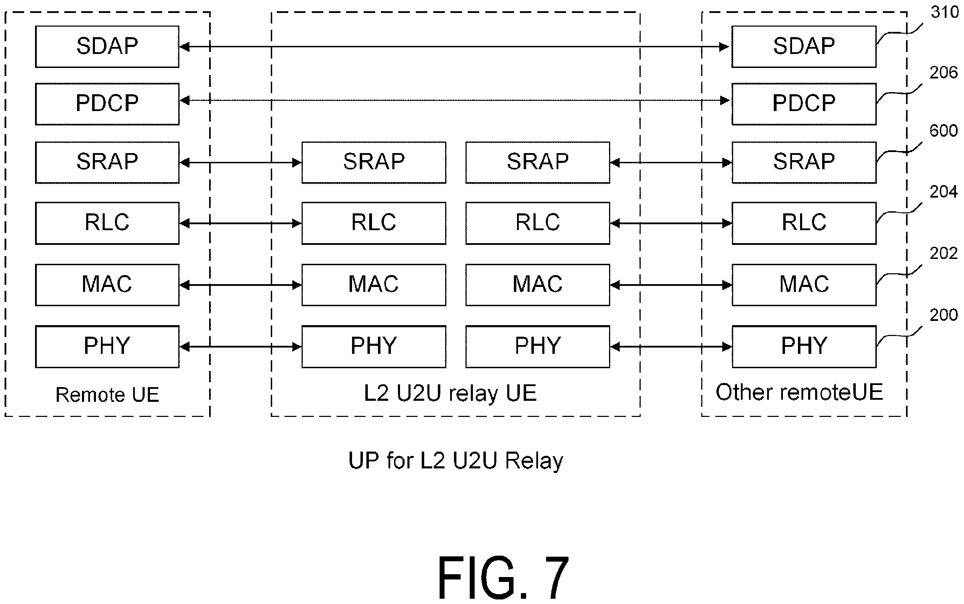

FIG. 6 and FIG. 7 illustrate examples of protocol stacks of a control plane (CP) and a user plane (UP) in a Layer-2 (L2) UE-to-UE (U2U) relay. As illustrated in FIG. 6 and FIG. 7, an SRAP 600 may be present. The SRAP 600 may be referred to as a Sidelink Relay Adaptation Protocol layer (SRAP layer), an SRAP layer, or the like, and different names may be used. As illustrated in FIG. 6 and FIG. 7, the PHY 200, the MAC 202, the RLC 204, and the SRAP 600 may be respectively associated between the remote UE and the L2 U2U relay UE, and between the L2 U2U relay UE and the other remote UE, and the PDCP 206, the RRC 208, and the SDAP 310 may be respectively associated between the remote UE and the other remote UE. Note that, as illustrated in FIG. 2, in order to control the PC5 connection between the remote UE and the other remote UE, the PC5-S 210 (not illustrated) may be used instead of the RRC 208. Note that, in the protocol stack in a layer 3 (L3) UE-to-UE relay, the PHY 200, the MAC 202, the RLC 204, the PDCP 206, the RRC 208, and the SDAP 310 may be respectively associated between the remote UE and the U2U relay UE, and between the U2U relay UE and the other remote UE, and the SRAP 600 may not be configured (not illustrated). In the L3 U2U relay, a layer higher than the SDAP may have a function to transmit, in the PC5 link, data received in the Uu link. The SRAP layer may be included in the AS layer.

Here, the SRAP will be described. The SRAP layer may include an SRAP sublayer. The SRAP sublayer may be present higher than the RLC sublayer for the control plane and the user plane of the PC5 interface and lower than the PDCP sublayer for the control plane and the user plane of the PC5 interface. The SRAP sublayer on the PC5 may be used for the purpose of bearer mapping. In the L2 U2U Relay UE, the SRAP sublayer includes one SRAP entity on the PC5 interface between the source UE and the relay UE, and may include a separate collocated SRAP entity on the PC5 interface between the relay UE and the destination UE. In the L2 U2U Remote UE, the SRAP sublayer may include only one SRAP entity on one PC5 interface. The SRAP entity associated between the Remote UE and the Relay LTE through the PC5 interface may be specifically referred to as a PC5-SRAP. Each SRAP entity may have a transmitter and a receiver. On the PC5 interface, the transmitter of the SRAP entity of the L2 U2U Remote UE may be associated with the receiver of the SRAP entity of the L2 U2U Relay UE, and the receiver of the SRAP entity of the L2 U2U Remote UE may be associated with the transmitter of the SRAP entity of the L2 U2U Relay UE.

The SRAP entity may have a function to forward data, a function to determine a UE ID and bearer ID fields of the SRAP header to be added to the data packet, function to determine an egress link, and a function to determine an egress RLC channel. In addition, the SRAP entity may have other functions.

In a case that the remote UE transmits data for sidelink to other remote UE, the remote LTE may be referred to as a source UE or the like, and other remote LTE may be referred to as a destination UE or the like. Similarly, in an opposite case that the other remote UE transmits data for sidelink to the remote LTE, the other remote LTE may be referred to as a source UE or the like, and the remote UE may be referred to as a destination UE or the like. Note that the source LTE may be referred to as, for example, a source remote UE, simply a remote LTE, or may be interchangeably interpreted. The destination UE may be referred to as, for example, a destination remote UE, simply a remote UE, a target UE, or the like, or may be interchangeably interpreted. The source UE and the destination UE may be identified by different names, or may be referred to as, for example, a U2U source UE and a U2U destination UE in order to clarify that the UEs are terminals performing U2U relay. The source UE and the destination UE may be referred to as, for example, an L2 U2U source UE, an L2 U2U destination UE, or the like in order to clarify that the communication is performed by the L2 U2U relay, or may be referred to as, for example, a L3 U2U source UE, a L3 U2U destination UE, or the like, similarly, in a case of clarifying that communication is performed by the L3 U2U relay. For example, even not in the case that any one of the remote UE and the other remote LTE transmits the data for sidelink, in a case that, for example, a set of U2U relays (a set of one remote UE, one relay UE, and another remote UE) is configured, a UE that is other than the U2U relay UE and initially transmits a discovery message may be referred to as a source UE, and a UE that is neither the source UE nor the U2U relay UE in the U2U relay may be referred to as a destination UE, or names such as the source UE and the destination UE may be used to simply distinguish between the two remote UEs.

The UE may transmit a discovery message and/or a direct communication request message to perform U2U relay. For example, the source UE may transmit a discovery message or a direct communication request message to select a relay UE for U2U relay. The discovery in this case may be a Model B discovery. The UE (a candidate for the relay UE) that receives the discovery message or the direct communication request message transmitted from the source UE may transmit the discovery message or the direct communication request message to the destination UE. The UE (a candidate for the relay UE) may transmit the discovery message and/or the direct communication request message to the source UE. The discovery in this case may be a Model A discovery.

In the sidelink, the Reference Signal Received Power (RSRP) measured by the UE may be, for example, the following RSRP.
(a) PSBCH RSRP
(b) PSSCH RSRP
(c) PSCCH RSRP

The PSBCH-RSRP (PSBCH RSRP) may be defined as a linear average of power contributions of resource elements transmitting multiple Demodulation Reference Signals (DMRS) associated with the PSBCH. The PSSCH-RSRP (PSSCH RSRP) may be defined as a linear average of power contributions of resource elements of antenna ports transmitting multiple DMRSs associated with the PSSCH, and in a case that there are multiple antenna ports, values of RSRP for the respective antenna ports may be summed. The PSCCH-RSRP (PSCCH RSRP) may be defined as a linear average of the power contributions of resource elements transmitting multiple DMRS associated with the PSCCH. Note that the DMRS may be used to demodulate, for example, signals of the PSBCH, the PSSCH, and the PSCCH. The terminal apparatus performing sidelink communication with another terminal apparatus may measure a sidelink communication RSRP of (SL-RSRP) using the PSSCH or the PSCCH transmitted from the other terminal apparatus. The terminal apparatus may measure the RSRP of the discovery message (SD-RSRP) using the power contributions of the resource elements transmitting the DMRS associated with the PSSCH carrying the discovery message.

In the measurement in the sidelink, the UE 122 may measure the following quantities in addition to the RSRP described above.
(a) Sidelink received signal strength indicator (SL RSSI)
(b) Sidelink channel occupancy ratio (SL CR)
(c) Sidelink channel busy ratio (SL CBR)

The SL RSSI may be defined as a linear average of the power ([W]) observed in the configured subchannel in OFDM symbols of a slot configured for the PSCCH and the PSSCH, starting from the second OFDM symbol. The SL CR in a slot n may be defined as a value obtained by dividing the sum of the number of subchannels used for sidelink transmission from a slot [n - a] to a slot [n - 1] and the number of subchannels allocated from a slot [n] to a slot [n + b] by the total number of subchannels configured from the slot [n - a] to the slot [n + b]. The SL CBR in the slot n may be defined as a ratio of subchannels in the resource pool with the SL RSSI exceeding a threshold during a period configured as a CBR measurement window (from the slot [n - a] to the slot [n - 1]).

There are two resource allocation modes for NR sidelink communication, where a mode in which the UE uses a resource scheduled by the base station to perform sidelink transmission is referred to as a mode 1, and a mode in which the UE automatically selects a resource to perform sidelink transmission is referred to as a mode 2. In the mode 1, the UE needs to be in RRC_CONNECTED, and in the mode 2, the UE is capable of sidelink transmission regardless of the RRC state or whether it is inside or outside the NG-RAN. Note that, in the mode 2, the LTE automatically selects a resource capable of sidelink transmission from one or more resource pools configured before the sidelink transmission is performed.

A variety of the present embodiments will be described based on the foregoing description. Note that, for each of the steps of processing omitted in the following description, each of the steps of processing described above may be applied.

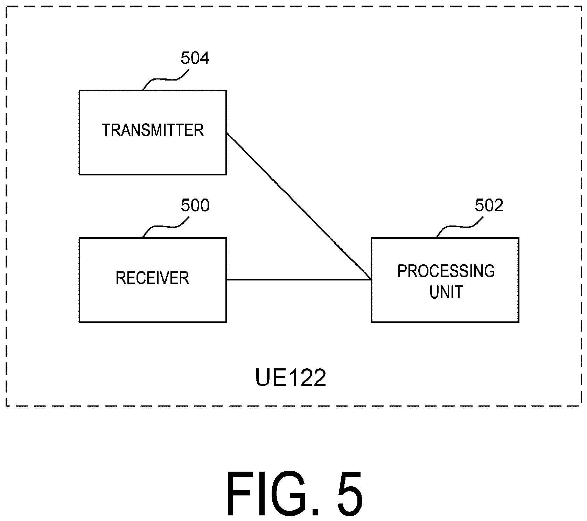

FIG. 5 is a block diagram illustrating a configuration of the terminal apparatus (UE 122) according to the present embodiment. Note that FIG. 5 illustrates only the main components closely related to the present embodiment in order to avoid complexity of description.

The LTE 122 illustrated in FIG. 5 includes a receiver 500 that receives control information (SCI, MAC control elements, RRC signalling, etc.), information including a discovery message and user data, and the like from another terminal apparatus, a processing unit 502 that performs processing according to parameters included in the received control information or the like, and a transmitter 504 that transmits control information (SCI, MAC control elements, RRC signalling, etc.), information including a discovery message and user data, and the like to another terminal apparatus. The processing unit 502 may include some or all of the functions of various layers (for example, the physical layer, the MAC layer, the RLC layer, the PDCP layer, the SRAP layer, the SDAP layer, the RRC layer, the PC5-S layer, the Discovery layer, and the application layer). Specifically, the processing unit 502 may include some or all of a physical layer processing unit (PHY processing unit), a MAC layer processing unit (MAC processing unit), an RLC layer processing unit (RLC processing unit), a PDCP layer processing unit (PDCP processing unit), an SRAP layer processing unit (SRAP processing unit), an SDAP layer processing unit (SDAP processing unit), an RRC layer processing unit (RRC processing unit), a PC5-S layer processing unit (PC5-S processing unit), a Discovery layer processing unit (Discovery processing unit), and an application layer processing unit.

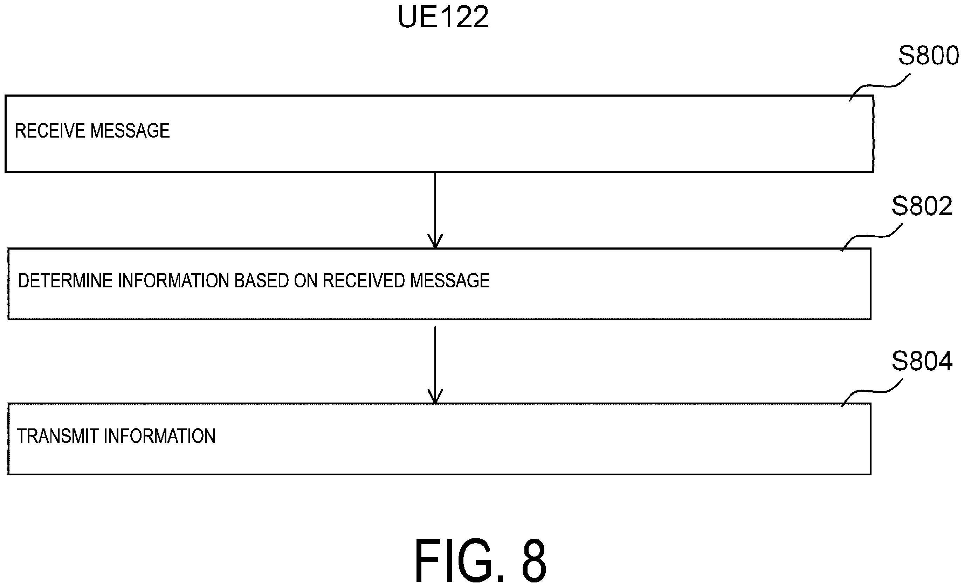

An example of an embodiment according to the present invention will be described using FIG. 8.

The UE 122 capable of sidelink communication, in a case of receiving a first message from a first terminal apparatus in step S800, determines information to be transmitted to a second terminal apparatus based on the received first message in step S802, and provides the information to the second terminal apparatus in step S804.

In step S802, the information transmitted by the UE 122 to the second terminal apparatus may be, for example, the RSRP measured in the received first message, or may be, for example, an offset value determined based on the RSRP measured in the received first message. Additionally or alternatively, in step S802, the information transmitted by the UE 122 to the second terminal apparatus may be the RSRP measured in sidelink communication (SL-RSRP) in a case of performing the sidelink communication with the first terminal apparatus, for example, or may be an offset value determined based on the RSRP measured in sidelink communication (SL-RSRP) in a case of performing the sidelink communication with the first terminal apparatus, for example. Additionally or alternatively, in step S802, the information transmitted by UE 122 to the second terminal apparatus may be, for example, a path loss measured in the received first message, or may be, for example, an offset value determined based on the path loss measured in the received first message. Note that even in the case of performing the sidelink communication with the first terminal apparatus, the SD-RSRP, the path loss, or the like may be used instead of the SL-RSRP.

In step S804, the UE 122 providing the information to the second terminal apparatus may be, for example, transmitting a second message including the information to the second terminal apparatus. The information may be provided from the AS layer to a layer higher than the AS layer, and the layer higher than the AS layer may include the information in the second message to transmit the information to the second terminal apparatus, or may transmit the information as a MAC Control Element (MAC CE) to the second terminal apparatus.

The second terminal apparatus, in a case of receiving the second message including the information from one or more terminal apparatuses, may determine which terminal apparatus is to be selected as a relay terminal (Relay UE) in U2U relay to the first terminal apparatus, by using the information. and the RSRP in the received second message or the sidelink communication RSRP (SL-RSRP) in the case of performing the sidelink communication with the terminal apparatus transmitting the second message or the path loss of the received second message. For example, the second terminal apparatus, in a case of receiving a discovery message as the second message and being provided with an offset value of the RSRP as the information, may evaluate the RSRP of the received discovery message (SD-RSRP) in consideration of the provided offset value.

Note that, instead of passing the information to the second terminal apparatus, the UE 122, in a case of transmitting, for example, the discovery message as the second message in accordance with the SD-RSRP, the SL-RSRP, the path loss, or the offset value, may select a resource pool for transmitting the discovery message to be transmitted to the second terminal apparatus. For example, in a case that the SD-RSRP is used and the SD-RSRP is in a first range, the discovery message may be transmitted using a first resource pool, and in a case that the SD-RSRP is used and the SD-RSRP is in a second range, the discovery message may be transmitted using a second resource pool. In a case that the UE 122 transmits the discovery message using the first resource pool and the second terminal apparatus receives the discovery message in a resource pool corresponding to the first resource pool, it may be determined that the SD-RSRP is in the first range. The second terminal apparatus may evaluate the RSRP of the received discovery message, based on the determination in order to determine whether to select the LTE 122 as the relay LTE in the U2U relay. The same processing may be applied to a case that messages other than the discovery message are used as the first message and the second message.

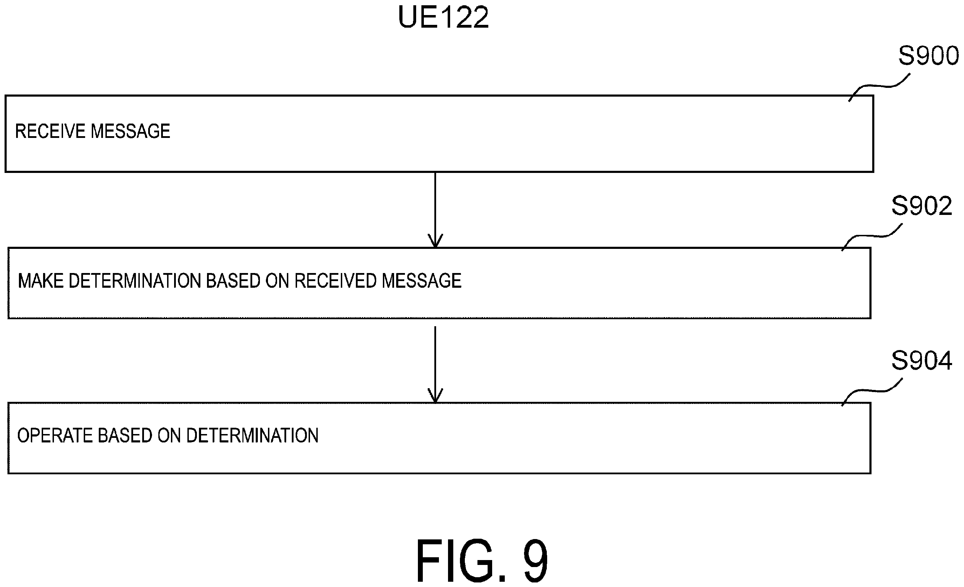

An example of another embodiment according to the present invention will be described using FIG. 9.

The UE 122 capable of sidelink communication, in a case of receiving a first message from a first terminal apparatus in step S900, makes determination based on the received first message in step S902, and operates based on the determination in step S904.

The determination in step S902 may be, for example, determination on whether an RSRP of the received first message is better than a threshold. Additionally or alternatively, the determination in step S902 may be, for example, determination on whether a path loss of the received first message is better than a threshold. Additionally or alternatively, the determination in step S902 may be, for example, determination on whether an RSRP in sidelink communication (SL-RSRP) is better than a threshold in the case of performing the sidelink communication with the first terminal apparatus. Note that the RSRP being better than the threshold may mean that the RSRP is equal to or greater than the threshold, and the RSRP being worse than the threshold may mean that the RSRP is less than the threshold. The path loss being better than the threshold may mean that the path loss is equal to or less than the threshold, and the path loss being worse than the threshold may mean that the path loss is greater than the threshold. The SL-RSRP being better than the threshold may mean that the SL-RSRP is equal to or greater than the threshold, and the SL-RSRP being worse than the threshold may mean that the SL-RSRP is less than the threshold. Note that the determination on whether it is equal to or greater than the threshold or less than the threshold may be replaced with the determination on whether it is greater than the threshold or less than the threshold. The determination on "whether the RSRP is better than the threshold" described above may be replaced with determination on "whether the RSRP is in the first range" described below.

In a case that it is determined in step S902 that the RSRP, the path loss, or the SL-RSRP is better than the threshold, in step S904, for example, the operation may be to transmit a second message based on the received first message to a second terminal apparatus, and in addition thereto or instead thereof, for example, the operation may be to forward the received first message to a higher layer (for example, the Discovery layer or the like). In a case that it is determined in step S902 that the RSRP, the path loss, or the SL-RSRP is worse than the threshold, in step S904, for example, the operation may be not to transmit the second message to the second terminal apparatus based on the received first message, and in addition thereto or instead thereof, for example, the operation may be not to forward the received first message to the higher layer (the Discovery layer).

Note that the thresholds for the UE 122 to determine whether the SD-RSRP, the path loss, or the SL-RSRP is good may be configured by the network, may be preconfigured as a default configuration for the UE 122, or may be determined by the first terminal apparatus and the determined thresholds may be transmitted through the higher layer (RRC, application layer, or the like) signalling or may be included in the MAC CE to be transmitted together with the discovery message. In a case that the determined threshold is transmitted in the application layer, the threshold may be transmitted as information included in a discovery message.

Note that in each embodiment, the first message and the second message may be discovery messages, Direct Communication Request messages, or other messages used for selecting relay terminals in the U2U relay. The contents of the first message and the second message may be different from each other. For example, the second message may include an identifier of the UE 122 in addition to the contents of the first message. An appropriate RSRP may be measured according to types of the first message and the second message. For example, in a case that the first message and the second message are discovery messages, the RSRP measured by using the first message and the second message may be SD-RSRP.

Note that the discovery message in each embodiment may be a discovery message used for the U2U relay. For example, the discovery message transmitted from the first terminal apparatus may include information on the first terminal apparatus and information on the second terminal apparatus. For example, the discovery message transmitted from the UE 122 may include information on the first terminal apparatus, information on the UE 122, and information on the second terminal apparatus. The information on the UE 122 and each terminal apparatus may be an identifier for identifying each terminal, or may include other information in addition thereto or instead thereof. The discovery message may include information on a type of the discovery message.

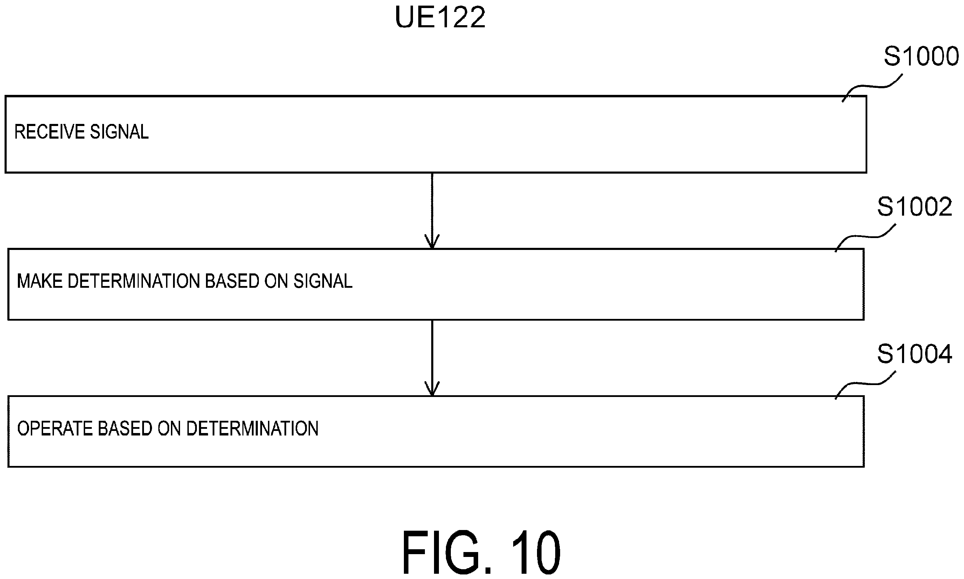

An example of another embodiment according to the present invention will be described using FIG. 10.

The UE 122 capable of sidelink communication receives a signal from a first terminal apparatus in step S 1000, makes determination based on the received signal in step S 1002, and operates based on the determination in step S1004.

The signal may be a signal transmitting a discovery message, a signal transmitting a Direct Communication Request message, signals transmitting other messages of the higher layers (the application layer, the Discovery layer, or the like), or a signal transmitting data transmitted in sidelink communication between the UE 122 and the first terminal apparatus. The UE 122 may measure a Reference Signal Received Power (RSRP) based on the signal. Additionally or alternatively, the UE 122 may identify the identifier of the first terminal apparatus from information such as the SCI included in the signal.

The determination in step S 1002 may be, for example, identifying the identifier of the first terminal apparatus transmitting the signal based on the signal. In this case, the operation in step S1004 may be, for example, storing the identifier in a first list. In addition to the identifier, for example, the RSRP measured by the UE 122 based on the signal may be stored in the first list. The RSRP and the identifier may be stored in the first list as a set, or different information may be additionally included in the set. In this case, for example, the UE 122 may include the RSRP and the identifier in a first set, and may include the first set in the first list. The first list may include one or more sets. Note that the set may be referred to as an entry.

The first list may be managed in an AS layer or may be managed in a non-AS layer (for example, the Discovery layer, the application layer, or the like). In a case of being managed in the non-AS layer, the AS layer may provide the set or information on the set to the non-AS layer.

As another example, in step S 1002, the UE 122 may determine the identifier of the first terminal apparatus transmitting the signal based on the signal, for example, and in addition, may determine whether the RSRP measured using the signal is in the first range. In this case, the UE 122 may operate in step S 1004 based on whether the RSRP is in the first range. For example, in a case that it is determined in step S1002 that the RSRP is in the first range, the operation in step S 1004 may be storing the identifier in the first list, for example. In a case that it is determined in step S 1002 that the RSRP is not in the first range, the operation in step S 1004 may be not storing the identifier in the first list, for example. The UE 122, in the case of storing the identifier in the first list, may additionally store the RSRP in the first list. In the case that the RSRP is stored in the first list, the RSRP and the identifier may be stored as a set in the first list, or different information may be additionally included in the set. The UE 122, in a case of determining that the RSRP is not in the first range and determining that the first set including the identifier is included in the first list, may delete the first set. Note that the set may be referred to as an entry. Note that being in the first range may mean that the RSRP is greater than a threshold 1, may mean that the RSRP is greater than the threshold 1 and less than a threshold 2, or may mean that the RSRP is less than the threshold 2. The conditions "greater than" and "less than" may be replaced with conditions such as "equal to or greater than" and "equal to or less than".

As another example of the operation in step S 1004, in the case that it is determined in step S 1002 that the RSRP is in the first range, the operation in step S1004 may be, for example, reporting the identifier to the higher layer, or in addition thereto or instead thereof, notifying the higher layer (the application layer or the like) that the RSRP is in the first range or similar information. In the case that it is determined in step S 1002 that the RSRP is not in the first range, the operation in step S 1004 may be, for example, reporting no identifier to the higher layer, or in addition thereto or instead thereof, notifying the higher layer (the application layer or the like) that the RSRP is not in the first range. The phrase "notifying B that it is A" may be replaced with "not notifying B that it is not A", or "notifying B that it is not A" may be replaced with "not notifying B that it is A".

The set stored in the first list may be managed by time. For example, the UE 122 may start a first timer at the time of storing the set in the first list, or may start the first timer at the time of measuring the RSRP associated with the set. When the first timer expires, the set may be deleted from the first list. In a case that a second set having an identifier the same as the identifier included in the first set is stored in the first list before the first timer expires, for example, the LTE 122 may delete the first set from the first list, or may update information other than the identifier in the first set based on the second set, restart the first timer, and not store the second set in the first list. A timer may be associated with each set, and multiple timers may operate. A value of the timer may be configured by the base station, may be configured based on the signal, may be configured with a default value, or may be a preconfigured value to be used. The set may be managed by methods other than time. For example, the UE 122 may delete all sets included in the first list in a case that the U2U relay is no longer of interest. In the case that the set with which the timer is associated is deleted, the timer may be stopped and/or deleted.

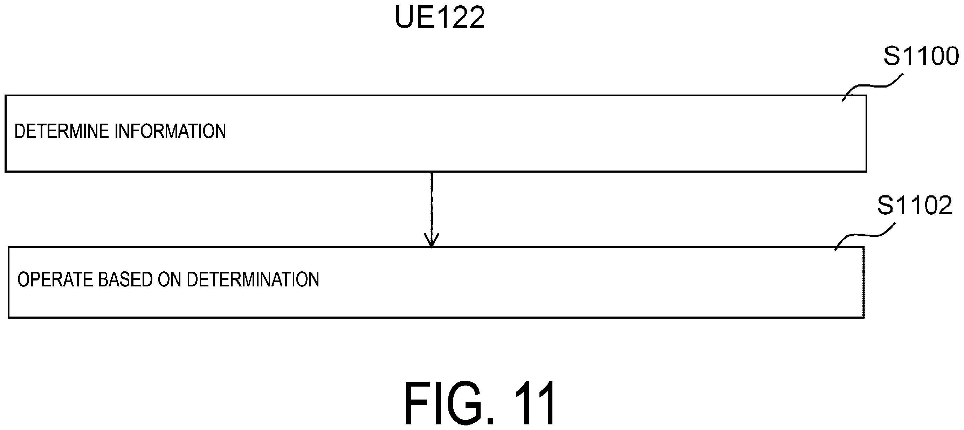

An example of another embodiment according to the present invention will be described using FIG. 11.

The UE 122 capable of sidelink communication makes determination on the information in step S1100 and operates based on the determination in step S1102.

The determination on the information in step S 1100 may be, for example, determination on whether the first identifier is included in the first list. In the Model A discovery, for example, in a case of notifying the source UE that the target UE (the destination UE) is in proximity to the UE 122, the first identifier may be the identifier of the target UE, in the Model B discovery, for example, the first identifier may be the identifier of the destination UE indicated by the discovery message received by the UE 122, and in a case that the UE 122 receives a DCR message from the source UE, for example, the first identifier may be the identifier of the target UE indicated by the DCR message. Additionally or alternatively, the determination on the information in step S1100 may be, for example, determination on whether the RSRP corresponding to the first identifier is in the first range. The RSRP corresponding to the first identifier may be an RSRP stored in the set including the first identifier among one or more sets stored in the first list. Note that in a case that the first identifier is not included in the first list, it may not be determined whether the RSRP is in the first range. Note that the RSRP being in the first range may mean that the RSRP is greater than the threshold 1, may mean that the RSRP is greater than the threshold 1 and less than the threshold 2, or may mean that the RSRP is less than the threshold 2. The conditions "greater than" and "less than" may be replaced with conditions such as "equal to or greater than" and "equal to or less than". Note that the first list may be the list described above with reference to FIG. 10. Note that the threshold 1 and the threshold 2 may be configured by the base station, may be configured with default values, may be preconfigured values to be used, or may be configured in other manners.

In step S1100, in the case that it is determined that the first identifier is included in the first list and/or the RSRP is included in the first range, the operation in step S1102 may be to transmit the first message, or in the case that it is determined that the first identifier is not included in the first list or the RSRP is not included in the first range, the operation in step S1102 may be not to transmit the first message. The first message may be a discovery message notifying the source UE that the target UE (the destination UE) is in proximity to the UE 122 in the Model A discovery, for example, may be a discovery message transmitted by the UE 122 to the destination UE based on at least reception of the discovery message by the UE 122 from the source UE in the Model B discovery, for example, or may be a DCR message transmitted by the UE 122 to the destination UE based on at least reception of the DCR message in a case that the UE 122 receives the DCR message from the source UE.

In the Model A discovery, the UE 122 may transmit the discovery message including the first list to the source UE. In this case, the UE 122 may transmit all sets included in the first list as a list, or may transmit a part of the sets included in the first list as a list. Note that the LTE 122 may transmit the message of the higher layer (the Discovery layer, the application layer, or the like) including the first list, or may transmit the first list in the form of the MAC CE or the like.

Note that in each embodiment, the sets included in the first list may be rearranged within the list. For example, the sets may be rearranged in order of size of the RSRPs included in the sets, in chronological order, or in accordance with other rules (in consideration of a cell ID, a PLMN ID, or the like). The UE 122, in a case of storing the RSRP in the first list, may store the RSRP as a measured value in the list, or may store as information other than the measured value. The UE 122, in a case of transmitting the first list, may transmit the RSRP as a measured value, or may transmit as information other than the measured value. The information other than the measurement value may be, for example, an offset value determined based on the RSRP, information indicating a range of the RSRP, or other information. Note that in each embodiment, the RSRP may the SD-RSRP, the SL-RSRP, or the path loss, or may be replaced with another measurement value.

Note that in each embodiment, the UE 122 may recognize receiving the DCR message by receiving data destined to a dedicated logical channel ID (LCID) or receiving a notification from the higher layer (the application layer), or based on other methods. The RSRP measured in a case that the UE 122 receives the DCR message may be the SL-RSRP or the SD-RSRP, or may be referred to by other names. Note that in the above description, the expression "store" may be replaced with the expression "add," "include," or the like. The names "source LTE" and "destination LTE" used in each embodiment may be replaced with each other, or may be other names.

Note that in each embodiment, the first terminal apparatus, the second terminal apparatus, and multiple other terminal apparatuses may be terminal apparatuses each of which is capable of sidelink communication and configured to include a receiver, a processing unit, and a transmitter, similarly to the UE 122.

In a case that relay UE selection in a UE-to-UE relay is performed using the operations described in NPLs 1, 5, and 6, the UE can evaluate only the link quality between the UE and a directly connected UE. However, according to the embodiments, the UE can evaluate a relay path including not only the link quality between the UE and the relay UE but also the link quality between the relay UE and another UE to select a more suitable relay UE.

In the above description, expressions such as "notified," "indicated," and the like may be interchangeably interpreted.

In the above description, expressions such as "linked," "mapped," and "associated" may be interchangeably interpreted.

In the above description, expressions such as "included," "being included," and "have been included" may be interchangeably interpreted.

In the above description, "the" may be rephrased as "the above-described".

In the above description, expressions such as "set to," "configured to," and "included" may be interchangeably interpreted.

In the example of each processing or the example of the flow of each processing in the above description, a part or all of the steps may not be performed. In the example of each processing or the example of the flow of each processing in the above description, order of the steps may be different. In the example of each processing or the example of the flow of each processing in the above description, a part or all of the processing in each step may not be performed. In the example of each processing or the example of the flow of each processing in the above description, order of processing in each step may be different. In the above description, "to perform B based on satisfaction of A" may be interpreted as "to perform B". In other words, "to perform B" may be performed independently of "satisfaction of A".

Note that in the above description, "A may be interpreted as B" may include the meaning that B is interpreted as A in addition to interpretation of A as B. In a case that the above description contains "C may be D" and "C may be E," this may mean inclusion of "D may be E." In a case that the above description contains "F may be G" and "G may be H," this may mean inclusion of "F may be H."

In the above description, in a case that a condition "A" and a condition "B" are conflicting conditions, the condition "B" may be expressed as "other" condition of the condition "A".

A program running on an apparatus according to the present embodiments may serve as a program that controls a Central Processing Unit (CPU) and the like to cause a computer to operate in such a manner as to realize the functions of the present embodiment. Programs or the information handled by the programs are temporarily loaded into a volatile memory such as a Random Access Memory (RAM) while being processed, or stored in a non-volatile memory such as a flash memory, or a Hard Disk Drive (HDD), and then read, modified, and written by the CPU, as necessary.

Note that the apparatuses in the above-described embodiments may be partially enabled by a computer. In such a case, a program for implementing such control functions may be recorded on a computer-readable recording medium to cause a computer system to read and execute the program recorded on this recording medium. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a fixed period of time, such as a volatile memory included in the computer system functioning as a server or a client in such a case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may include a digital circuit, or may include an analog circuit. Furthermore, in a case that with advances in semiconductor technology, a circuit integration technology appears that replaces the present integrated circuits, it is also possible to use an integrated circuit based on the technology.

Note that the present embodiments are not limited to the above-described embodiments. Although apparatuses have been described as an example in the embodiments, the present embodiments are not limited to these apparatuses, and are applicable to a stationary type or a non-movable type electronic apparatus installed indoors or outdoors such as a terminal apparatus or a communication apparatus, for example, an AV device, a kitchen device, a cleaning or washing machine, an air-conditioning device, office equipment, a vending machine, and other household appliances.

Although, the embodiments have been described in detail above referring to the drawings, the specific configuration is not limited to the embodiments and includes, for example, design changes within the scope that does not depart from the gist of the embodiments. Furthermore, various modifications are possible within the scope of the present embodiments defined by claims, and embodiments that are made by suitably combining technical means disclosed according to the different embodiments are also included in the technical scope of the present embodiment. A configuration in which components, which are described in the embodiments described above, having similar effects are interchanged is also included in the present invention.

### Reference Signs List

100 ng-eNB
102 gNB
110, 112, 114 Interface
122 UE
200 PHY
202 MAC
204 RLC
206 PDCP
208 RRC
210 PC5-S
310 SDAP
400 Discovery
500 Receiver
502 Processing unit
504 Transmitter
600 SRAP

## Claims

1. A first terminal apparatus for performing sidelink communication, the first terminal apparatus comprising:
a processing unit;
a receiver configured to receive a first message from a second terminal apparatus; and
a transmitter, wherein
the processing unit determines information based on a Reference Signal Received Power, RSRP, of the first message received from the second terminal apparatus,
the transmitter transmits a second message including the information to a third terminal apparatus, and
the first message and the second message are messages used to select a terminal apparatus being responsible to forward a sidelink transmission of the second terminal apparatus to the third terminal apparatus.

2. A method for a first terminal apparatus configured to perform sidelink communication, the method comprising:
receiving a first message from a second terminal apparatus;
determining information based on a Reference Signal Received Power, RSRP, of the first message received from the second terminal apparatus; and
transmitting a second message including the information to a third terminal apparatus, wherein
the first message and the second message are messages used to select a terminal apparatus being responsible to forward a sidelink transmission of the second terminal apparatus to the third terminal apparatus.

3. An integrated circuit mounted on a first terminal apparatus configured to perform sidelink communication, the integrated circuit performing:
receiving a first message from a second terminal apparatus;
determining information based on a Reference Signal Received Power, RSRP, of the first message received from the second terminal apparatus; and
transmitting a second message including the information to a third terminal apparatus, wherein
the first message and the second message are messages used to select a terminal apparatus being responsible to forward a sidelink transmission of the second terminal apparatus to the third terminal apparatus.
